# FASCICULE DE BREVET EUROPEEN

(11) **EP 4 389 604 B1**
(45) Date de publication et mention de la délivrance du brevet: **10.09.2025**
(21) Numéro de dépôt: 23216990.4
(22) Date de dépôt: 15.12.2023
(51) Int. Cl.: B64D 27/18, B64D 29/06

(54) **AÉRONEF COMPORTANT UN MÂT RÉACTEUR AVEC UN CAPOT MOBILE**
FLUGZEUG MIT EINEM TRIEBWERKSMAST MIT EINER BEWEGLICHEN HAUBE
AIRCRAFT COMPRISING A JET ENGINE MAST WITH A MOVABLE COWL

(30) Priorité: 19.12.2022 FR 2213828
(43) Date de publication de la demande: 26.06.2024
(73) Titulaire: AIRBUS OPERATIONS, 31060 Toulouse Cedex 9 (FR)
(72) Inventeur: PAUTIS, Olivier, 31060 TOULOUSE (FR); MESSINA, Paolo, 31060 TOULOUSE (FR); BLANC, Jonathan, 31060 TOULOUSE (FR); ROBIGLIO, Thomas, 31060 TOULOUSE (FR); FIRMIGNAC, Thomas, 31060 TOULOUSE (FR)
(74) Mandataire: Cabinet Le Guen Maillet

(56) Documents cités:
- EP-A1- 0 126 840
- FR-A1- 3 120 854
- FR-A1- 3 121 428
- US-A- 4 428 609
- US-A1- 2020 070 992

## Description

### DOMAINE TECHNIQUE

La présente invention concerne un aéronef comportant un mât réacteur avec un capot mobile permettant d'accéder à l'intérieur du mât réacteur.

### ÉTAT DE LA TECHNIQUE ANTÉRIEURE

Un aéronef comporte classiquement un réacteur, par exemple un turboréacteur, qui est fixé sous une aile de l'aéronef à l'aide d'un mât réacteur. Le mât réacteur est constitué d'une structure rigide qui est fixée, d'une part, à une structure de l'aile et, d'autre part, à une structure du réacteur. Le mât réacteur permet la transmission des efforts générés par le réacteur à la structure de l'aile, lorsque le réacteur est en marche. Le mât réacteur permet également le passage de systèmes entre l'aile et le réacteur, comme par exemple le système électrique, le système hydraulique, pneumatique etc.

Pour limiter la traînée du mât réacteur, celui-ci est recouvert d'un ensemble de capots (voir par exemple le document FR3120854). Les capots sont positionnés les uns à côté des autres pour réaliser une surface la plus lisse possible et sont fixés soit à la structure du mât réacteur, soit à la structure de l'aile de l'avion.

Pour accéder à l'intérieur du mât réacteur, des trappes amovibles sont prévues sur certains de ces capots. Les trappes sont fixées par des éléments de visseries ou des rivets et, après retrait, un technicien peut accéder à l'intérieur du mât réacteur et ainsi assurer la maintenance des éléments présents.

La fixation des capots nécessite la présence d'une structure relativement rigide et donc lourde. En outre, du fait des tolérances de fabrication et d'assemblage, la juxtaposition de plusieurs capots les uns à côté des autres, ne peut pas se faire sans apparition d'espaces et désaffleurements entre ces capots. Ces espaces et dés affleurements peuvent entraîner une perturbation de l'écoulement de l'air et l'apparition de phénomènes acoustiques. Enfin, le retrait des trappes ne permet pas un accès aisé à l'intérieur du mât réacteur et leur présence oblige à la mise en place d'éléments de renforts structuraux locaux.

### EXPOSÉ DE L'INVENTION

Un objet de la présente invention est ainsi de proposer un aéronef comportant un mât réacteur avec un capot mobile. Un tel capot mobile permet un accès aisé au mât réacteur et aux systèmes qui y sont inclus, notamment pour les tâches de maintenance et d'inspection, et la structure soutenant ce capot mobile est simplifiée par rapport à une structure de l'état de la technique. En outre, ce capot mobile peut être réalisé d'une seule pièce, réduisant d'autant les perturbations de l'écoulement de l'air et l'apparition de phénomènes acoustiques.

À cet effet, est proposé un aéronef comportant une structure fixe, une aile, un réacteur et un mât réacteur fixé entre l'aile et le réacteur, le mât réacteur comportant une structure primaire destinée à fixer entre eux le réacteur et l'aile, et un système de capotage comportant :
- un ensemble de capots avant où les capots sont fixes autour de la structure primaire,
- un coulisseau portant un capot arrière mobile disposé dans la continuité et à l'arrière de l'ensemble de capots avant, où le coulisseau est mobile en translation parallèlement à une direction de translation d'une position avancée, dans laquelle le capot arrière mobile est en continuité à l'arrière de l'ensemble de capots avant à une position reculée, dans laquelle le capot arrière mobile est éloigné vers l'arrière de l'ensemble de capots avant,
- un système de déplacement arrangé pour déplacer ledit coulisseau et comportant de part et d'autre d'un plan médian du mât réacteur, au moins un guide solidaire de la structure fixe au niveau d'une partie arrière du capot arrière mobile en position fermée, pour chaque au moins un guide, un élément coulissant solidaire du coulisseau et monté coulissant le long de chaque guide disposé du même côté pour réaliser une liaison glissière, et pour chaque élément coulissant, un support solidaire de la structure fixe et présentant une palette parallèle à la direction de translation et sur laquelle une surface parallèle à la direction de translation du coulisseau repose, où chaque support est disposé à l'avant des guides et globalement au milieu de l'élément coulissant lorsque le coulisseau est en position avancée, et
- un système de blocage prenant alternativement une position verrouillée dans laquelle il bloque le coulisseau en position avancée, et une position déverrouillée dans laquelle il ne bloque pas le coulisseau.

La présence du capot mobile et de son système de déplacement assure un accès aisé à l'intérieur du mât réacteur et aux systèmes qui y sont logés et un déplacement aisé dudit capot mobile.

Avantageusement, chaque élément coulissant présente un cylindre parallèle à la direction de translation dont la longueur est au moins égale à la longueur de déplacement du coulisseau, et chaque guide présente un alésage parallèle à la direction de translation dans lequel ledit cylindre est monté coulissant.

Avantageusement, la structure fixe comporte un pion de centrage avant bas et le coulisseau présente un premier logement dans lequel loge ledit pion de centrage avant bas lorsque le coulisseau arrive en position avancée, où le premier logement est disposé au niveau du plan médian et en partie basse et à l'avant du capot arrière mobile.

Avantageusement, le coulisseau présente deux pions de centrage avant haut disposés de part et d'autre du plan médian et en partie haute et à l'avant du capot arrière mobile, et la structure fixe présente, pour chaque pion de centrage avant haut, un deuxième logement dans lequel loge ledit pion de centrage avant haut lorsque le coulisseau arrive en position avancée. Avantageusement, le coulisseau présente deux pions de centrage arrière disposés de part et d'autre du plan médian et en partie haute et au voisinage des guides en position avancée, et la structure fixe présente, pour chaque pion de centrage arrière, un troisième logement dans lequel loge ledit pion de centrage arrière lorsque le coulisseau arrive en position avancée.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue de côté d'un ensemble propulsif comportant un mât réacteur selon l'invention,
Fig. 3 est une vue de côté du mât réacteur selon l'invention en position avancée et fermée,
Fig. 4 est une vue en perspective de dessous du mât réacteur,
Fig. 5 est une vue de derrière du mât réacteur selon la flèche V de la Fig. 3,
Fig. 6 est une vue en perspective du détail VI de la Fig. 4,
Fig. 7 est une vue de côté du détail VII de la Fig. 3, et
Fig. 8 est une vue en perspective d'un mode de réalisation du capot mobile du mât réacteur.

### EXPOSÉ DÉTAILLÉ DE MODES DE RÉALISATION

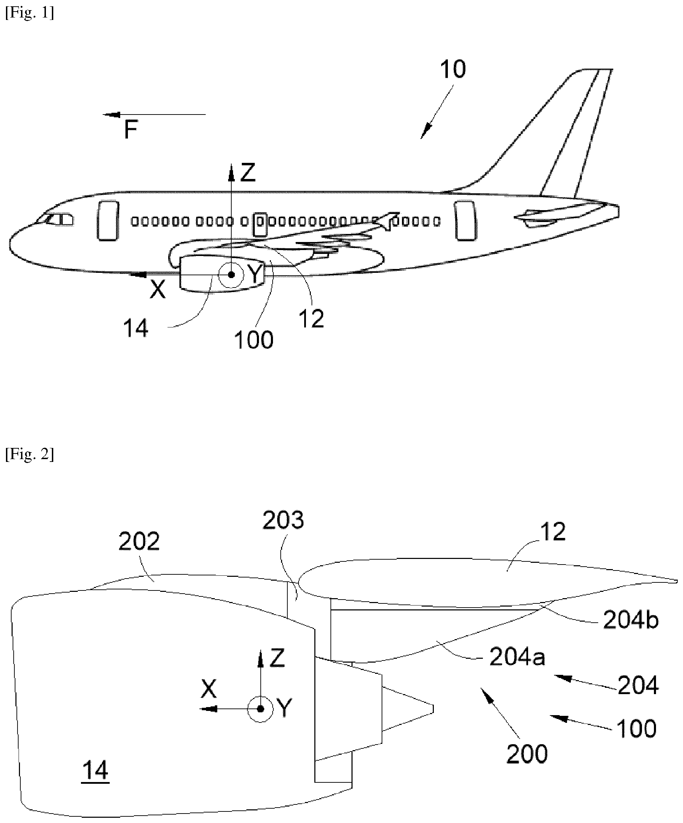

La Fig. 1 montre un aéronef 10 qui comporte un réacteur 14, par exemple un turboréacteur, et une aile 12 sous laquelle est fixé le réacteur 14 par l'intermédiaire d'un mât réacteur 100. L'aéronef 10 comporte une structure fixe 50 qui peut englober la structure de l'aile 12 et la structure du réacteur 14.

Dans la description qui suit, les termes relatifs à une position sont pris en référence à un aéronef 10 en position normale de vol, c'est-à-dire comme il est représenté sur la Fig. 1, et les positions « avant » et « arrière » sont prises par rapport à l'avant et l'arrière du réacteur 100 et par rapport à la direction d'avancement F de l'aéronef 10 lorsque le réacteur 100 fonctionne.

Dans la description qui suit, et par convention, on appelle X la direction longitudinale du réacteur 100 qui est parallèle à l'axe longitudinal dudit turboréacteur, on appelle Y la direction transversale qui est horizontale lorsque l'aéronef 10 est au sol, et Z la direction verticale qui est verticale lorsque l'aéronef 10 est au sol, ces trois directions X, Y et Z étant orthogonales entre elles.

La Fig. 2 montre l'aile 12 et le réacteur 14 fixés l'un à l'autre par l'intermédiaire du mât réacteur 100 qui comporte un ensemble de capots avant 202, 203 et un capot arrière 204. Dans le mode de réalisation de l'invention présenté ici, le capot arrière 204 est divisé en un capot arrière mobile 204a en partie basse et un capot arrière fixe 204b en partie haute entre le capot arrière mobile 204a et l'aile 12. Le capot arrière fixe 204b est solidaire du panneau intrados de l'aile 12 et peut être considéré comme faisant partie de l'aile 12.

Dans un autre mode de réalisation de l'invention (non représenté), le capot arrière 204 se limite au capot arrière mobile 204a qui vient directement contre le panneau intrados de l'aile 12.

Dans le mode de réalisation de l'invention présenté ici, l'ensemble de capots avant comporte un capot avant 202 et un capot intermédiaire 203 disposé à l'arrière du capot avant 202, mais dans un autre mode de réalisation, le capot avant 202 et le capot intermédiaire 203 peuvent constituer un seul et même capot.

Le capot arrière mobile 204a est disposé à l'arrière de l'ensemble de capots avant 202, 203. Ici, le capot arrière mobile 204a est disposé sous l'aile 12 et à l'arrière du réacteur 14 et le capot avant 202 est disposé au-dessus du réacteur 14 et à l'avant de l'aile 12. Le capot intermédiaire 203 fait la jonction entre le capot avant 202 et le capot arrière 204.

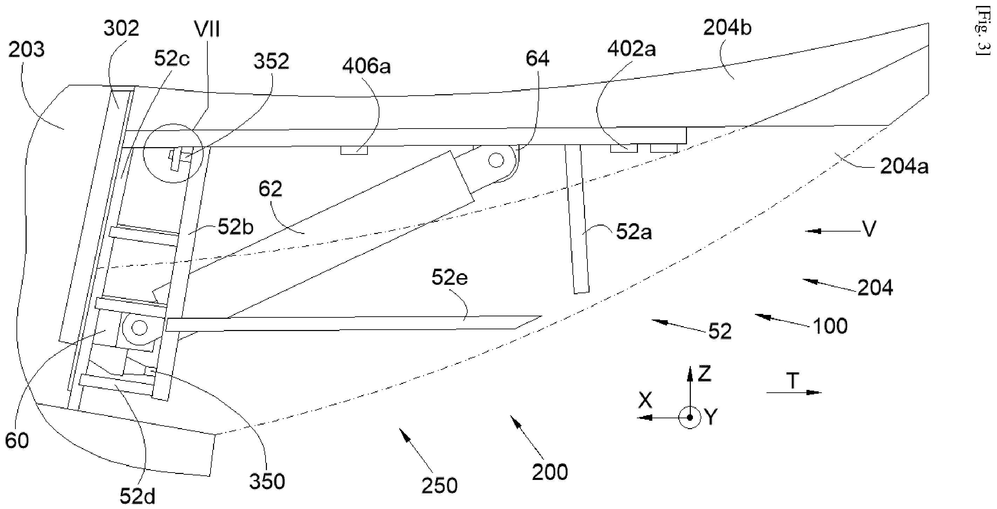

La Fig. 3 montre le mât réacteur 100 comportant un coulisseau 52 sur lequel le capot arrière mobile 204a est fixé. Dans le mode de réalisation de l'invention présenté sur la Fig. 3, le coulisseau 52 est constitué de nervures verticales 52a-c et de raidisseurs horizontaux 52d-e qui sont fixées entre elles et le capot arrière mobile 204a est fixé autour du coulisseau 52 pour le recouvrir.

La Fig. 3 montre le mât réacteur 100 en position fermée et avancée du coulisseau 52 et du capot arrière mobile 204a qui est vu en transparence. Le coulisseau 52 est arrangé pour passer de la position fermée et avancée à une position ouverte et reculée et inversement, où le coulisseau 52 et le capot arrière mobile 204a sont déplacés en translation parallèlement à une direction de translation T globalement parallèle à la direction longitudinale X.

Le mât réacteur 100 comprend une structure rigide 302, également appelée structure primaire, destinée à être fixer entre une structure du réacteur 14 et une structure de l'aile 12, comme en particulier le longeron avant de l'aile 12 qui s'étend globalement selon la direction transversale Y. La structure rigide 302 ne constitue pas un élément essentiel de l'invention, et elle peut prendre différentes formes.

La structure primaire 302 soutient le réacteur 14 par l'intermédiaire de moyens de fixation (non illustrés) disposés globalement à l'avant et à l'arrière de la structure primaire 302 et qui prennent par exemple la forme de ceux divulgués dans le document US-A-2016/0221682.

La structure primaire 302 est matérialisée ici par une nervure arrière.

La fixation de la structure primaire 302 à l'aile 12 est réalisée par exemple par des jeux de manilles.

Dans le mode de réalisation de l'invention présenté ici, le mât réacteur 100 comporte également, à l'arrière de la structure primaire 302, une chape arrière 60 solidaire de la structure primaire 302. La structure primaire 302 est fixée à l'aile 12 entre autres par une bielle arrière 62 qui relie, en utilisation, la chape arrière 60 à une chape supérieure 64 de l'aile 12.

La bielle arrière 62 présente une première extrémité montée articulée à la chape arrière 60 et une deuxième extrémité montée articulée sur la chape supérieure 64, en particulier au niveau du panneau intrados de l'aile 12.

Dans le mode de réalisation de l'invention présenté ici, les capots 202 et 203 de l'ensemble de capots avant 202, 203 sont fixés autour de la structure primaire 302, c'est-à-dire que la structure primaire 302 est logée au moins en partie dans l'ensemble de capots avant 202, 203. Dans le mode de réalisation particulier présenté ici, la bielle arrière 62 est logée à l'intérieur du capot arrière 204. Bien sûr, selon la conception du mât réacteur 100, l'arrangement peut être différent.

Le capot avant 202 et la capot intermédiaire 203 sont fixés à la structure primaire 302 par tous moyens de fixation appropriés comme par exemple des éléments de supports, des ferrures, et maintenus au moyen de visseries ou de rivets.

Le mât réacteur 100 comporte ainsi un système de capotage 200 qui comporte l'ensemble de capots avant 202, 203 et le coulisseau 52 incorporant le capot arrière mobile 204a.

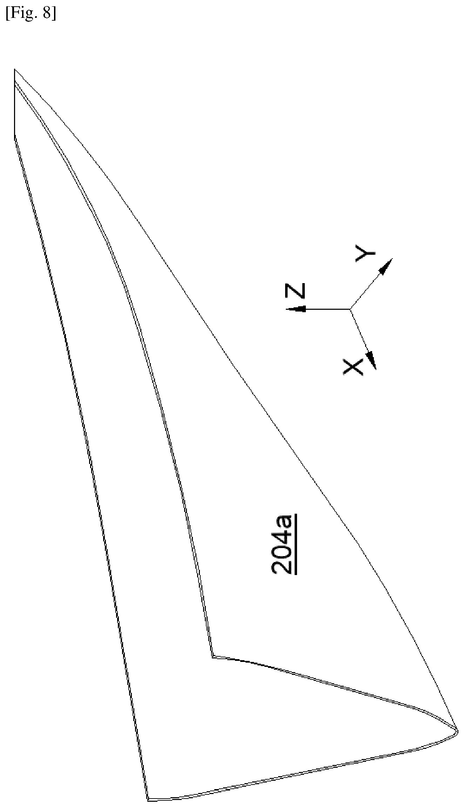

Le système de capotage 200 comporte également un système de déplacement 250 qui assure le déplacement du coulisseau 52 et du capot arrière mobile 204a en translation parallèlement à la direction de translation T de la position fermée/avancée, dans laquelle le capot arrière mobile 204a est en contact, sur sa face avant, avec le capot intermédiaire 203 et s'étend en continuité à l'arrière de l'ensemble de capots avant 202, 203 et plus particulièrement ici du capot intermédiaire 203, à la position ouverte/reculée, dans laquelle le capot arrière mobile 204a est reculé par rapport à sa position avancée, de manière à être éloigné vers l'arrière de l'ensemble de capots avant 202, 203 et plus particulièrement ici du capot intermédiaire 203, et ainsi dégager un espace entre l'ensemble de capots avant 202, 203 et le capot arrière mobile 204a pour permettre d'accéder à l'intérieur du mât réacteur 100 et aux différents systèmes qui s'y logent (non représentés sur les figures de ce dossier). Le capot arrière mobile 204a est ainsi un capot mobile et le dégagement du capot arrière mobile 204a permet un accès facile par rapport aux trappes de l'état de la technique. En outre, il n'est pas nécessaire de prévoir des trappes d'accès, d'où une simplification de la structure par rapport à l'état de la technique, comme par exemple une peau externe 'monobloc' du capot, réalisée d'un seul tenant et favorisant l'écoulement aérodynamique comme cela est représenté sur la Fig. 8 qui montre le capot arrière mobile 204a d'un seul tenant. L'arrêt du coulisseau 52 et du capot arrière mobile 204a en position ouverte/reculée est assurée par exemple par tout moyen d'arrêt approprié, comme par exemple une butée de fin de course solidaire de la structure fixe 50 et contre laquelle un élément du coulisseau 52 ou du capot arrière mobile 204a vient en butée. Pour permettre un démontage complet du capot arrière mobile 204a, le moyen d'arrêt est amovible. Le système de capotage 200 comporte également un système de blocage, tel qu'un verrou ou loquet ou un élément de visserie, qui peut prendre alternativement une position verrouillée dans laquelle il bloque le coulisseau 52 et le capot arrière mobile 204a en position avancée, et une position déverrouillée dans laquelle il ne bloque ni le coulisseau 52 ni le capot arrière mobile 204a, et les laisse libres de passer de la position avancée à la position reculée et inversement. Dans la position déverrouillée, le coulisseau 52 et le capot arrière mobile 204a sont donc libres en translation.

Le système de blocage permet de fixer le coulisseau 52 et/ou le capot arrière mobile 204a à un élément fixe comme la structure fixe 50, ou un élément du mât réacteur 100, comme par exemple le capot intermédiaire 203 ou la structure primaire 302.

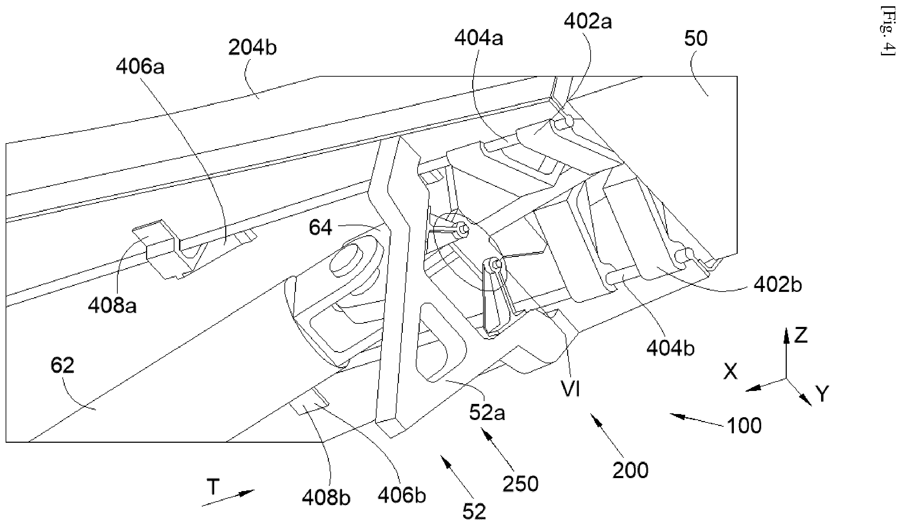

Les Figs. 4, 5, 6 et 7 montrent différentes vues du système de déplacement 250 qui est globalement symétrique par rapport à un plan médian vertical XZ du mât réacteur 100.

Le système de déplacement 250 comporte de part et d'autre du plan médian XZ, au moins un guide 402a-b destiné à assurer un guidage du coulisseau 52 parallèlement à la direction de translation T et solidaire de la structure fixe 50 de l'aéronef 10 comme par exemple la structure de l'aile 12. Dans le mode de réalisation de l'invention présenté ici, il y a deux guides 402a-b de chaque côté, c'est-à-dire deux à bâbord et deux à tribord, et les guides 402a-b sont arrangés au niveau d'une partie arrière du capot arrière mobile 204a lorsqu'il est en position fermée/avancée.

Le système de déplacement 250 comporte également, de part et d'autre du plan médian XZ, un élément coulissant 404a-b solidaire du coulisseau 52. Il y a ainsi un élément coulissant 404a à bâbord et un élément coulissant 404b à tribord, et chaque élément coulissant 404a-b est monté coulissant le long de chaque guide 402a-b disposé du même côté. La longueur de chaque élément coulissant 404a-b est telle qu'il coulisse dans les guides 402a-b entre la position fermée/avancée et la position ouverte/reculée.

Chaque guide 402a-b présente une longueur réduite par rapport à la longueur de la translation subie par le coulisseau 52, et donc par rapport à la longueur de l'élément coulissant 404a-b correspondant, pour limiter les efforts en cas de défaut de parallélisme. La longueur de chaque guide 402a-b est par exemple de l'ordre d'un tiers de la longueur de la translation.

Dans le mode de réalisation de l'invention présenté ici, chaque élément coulissant 404a-b présente un cylindre parallèle à la direction de translation T dont la longueur est au moins égale à la longueur de déplacement du coulisseau 52, et chaque guide 402a-b présente un alésage parallèle à la direction de translation T dans lequel ledit cylindre est monté coulissant. L'alésage présente une fente à travers laquelle passe la partie du coulisseau 52 assurant la jonction avec le cylindre. Bien sûr, tout autre type de formes complémentaires est possible pour réaliser la liaison glissière parallèle à la direction de translation T.

La coopération entre les guides 402a-b et les éléments coulissants 404a-b assure le déplacement en translation du coulisseau 52 et du capot arrière mobile 204a le long de la direction de translation T, entre la position avancée et la position reculée et inversement.

Du fait que les guides 402a-b présentent des longueurs réduites par rapport à l'élément coulissant 404a-b et sont disposés à l'arrière du capot arrière mobile 204a, le système de déplacement 250 comporte également, pour chaque élément coulissant 404a-b, c'est-à-dire de part et d'autre du plan médian XZ, un support 406a-b solidaire de la structure fixe 50 et présentant une palette 408a-b parallèle à la direction de translation T et sur laquelle une surface du coulisseau 52 parallèle à la direction de translation T repose. Chaque support 406a-b est disposé à l'avant des guides 402a-b et globalement au milieu de l'élément coulissant 404a-b lorsque le coulisseau 52 est en position fermée/avancée.

Chaque support 406a-b assure une reprise des efforts en Z lors des déplacements du coulisseau 52 et du capot arrière mobile 204a au début de la translation depuis la position fermée/avancée. Chaque support 406a-b assure également un support du coulisseau 52 en évitant un coincement de ce dernier à cause du porte-à-faux dû à la position reculée des guides 402a-b.

Pour assurer des reprises d'efforts entre le coulisseau 52 et la structure fixe 50, l'aéronef 10 comporte une pluralité de pions de centrage de positionnement, où chacun est solidaire du coulisseau 52 ou de la structure fixe 50 et, pour chaque pion de centrage de positionnement, la structure fixe 50 ou le coulisseau 52 comporte un logement dans lequel loge ledit pion de centrage de positionnement lorsque le coulisseau 52 est en position avancée.

Dans le mode de réalisation de l'invention présenté ici, il y a un pion de centrage avant bas 350, deux pions de centrage avant haut 352 et deux pions de centrage arrière 354.

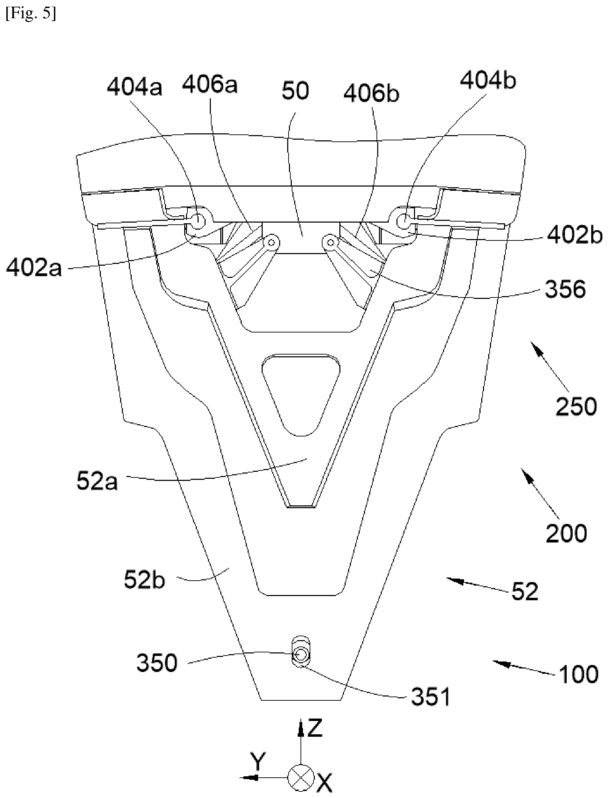

Le pion de centrage avant bas 350 qui est mieux vu sur la Fig. 5 est solidaire de la structure fixe 50, ici par l'intermédiaire de la structure rigide 302, et il est orienté vers l'arrière, et le coulisseau 52, ici une nervure verticale 52b, présente un premier logement 351 dans lequel loge ledit pion de centrage avant bas 350. Le premier logement 351 est disposé au niveau du plan médian XZ et en partie basse et à l'avant du capot arrière mobile 204a.

Le pion de centrage avant bas 350 s'emmanche ainsi dans le premier logement 351 lorsque le coulisseau 52 arrive en position avancée.

Le premier logement 351 présente une forme oblongue dont le grand axe est vertical et dont la largeur le long du petit axe est adaptée au diamètre du pion de centrage avant bas 350 pour assurer un ajustement glissant juste. Un tel arrangement permet une reprise des efforts transversaux selon la direction transversale Y.

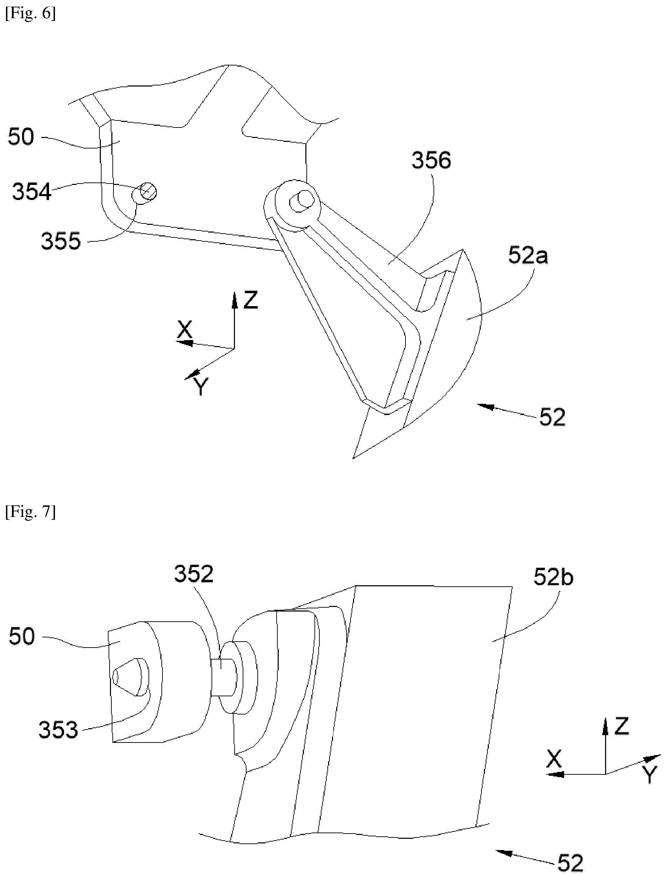

Les deux pions de centrage avant haut 352, dont un est mieux vu sur la Fig. 7, sont solidaires du coulisseau 52, ici par l'intermédiaire d'une nervure verticale 52b et ils sont orientés vers l'avant et sensiblement parallèles à l'axe longitudinal des guides 404a-b, et la structure fixe 50 présente, pour chaque pion de centrage avant haut 352, un deuxième logement 353 dans lequel loge ledit pion de centrage avant haut 352. Les deux pions de centrage avant haut 352 sont disposés de part et d'autre du plan médian XZ et en partie haute et à l'avant du capot arrière mobile 204a.

Chaque pion de centrage avant haut 352 s'emmanche ainsi dans le deuxième logement 353 associé lorsque le coulisseau 52 arrive en position avancée.

Chaque deuxième logement 353 prend la forme d'un alésage circulaire intégré dans une chape solidaire de la structure fixe 50 et adapté au diamètre du pion de centrage avant haut 352 associé pour assurer un ajustement glissant juste. Un tel arrangement permet une reprise des efforts transversaux selon la direction transversale Y et des efforts verticaux selon la direction verticale Z.

Les deux pions de centrage arrière 354, qui sont mieux vus sur la Fig. 6, sont solidaires du coulisseau 52, ici par l'intermédiaire successivement d'une nervure verticale 52a et de palettes 356 solidaires de la nervure verticale 52a, et ils sont orientés vers l'avant, et la structure fixe 50 présente, pour chaque pion de centrage arrière 354, un troisième logement 355 dans lequel loge ledit pion de centrage arrière 354. Les deux pions de centrage arrière 354 sont disposés de part et d'autre du plan médian XZ et en partie haute du capot arrière mobile 204a et au voisinage des guides 402a-b lorsque le coulisseau 52 est en position avancée.

Pour des raisons de clarté, la palette 356 bâbord a été retirée pour permettre de visualiser le troisième logement 355 et le pion de centrage arrière 354 dans le troisième logement 355. Chaque pion de centrage arrière 354 s'emmanche ainsi dans le troisième logement 355 associé lorsque le coulisseau 52 arrive en position avancée.

Chaque troisième logement 355 prend la forme d'un alésage circulaire intégré dans une chape solidaire de la structure 50 et adapté au diamètre du pion de centrage arrière 354 associé pour assurer un ajustement glissant juste. Un tel arrangement permet une reprise des efforts transversaux selon la direction transversale Y et des efforts verticaux selon la direction verticale Z.

## Revendications

1. Aéronef (10) comportant une structure fixe (50), une aile (12), un réacteur (14) et un mât réacteur (100) fixé entre l'aile (12) et le réacteur (14), le mât réacteur (100) comportant une structure primaire (302) destinée à fixer entre eux le réacteur (14) et l'aile (12), et un système de capotage (200) comportant :
- un ensemble de capots avant (202, 203), où les capots sont fixes autour de la structure primaire (302),
- un coulisseau (52) portant un capot arrière mobile (204a) disposé dans la continuité et à l'arrière de l'ensemble de capots avant (202, 203), où le coulisseau (52) est mobile en translation parallèlement à une direction de translation (T) d'une position avancée, dans laquelle le capot arrière mobile (204a) est en continuité à l'arrière de l'ensemble de capots avant (202, 203) à une position reculée, dans laquelle le capot arrière mobile (204a) est éloigné vers l'arrière de l'ensemble de capots avant (202, 203),
- un système de déplacement (250) arrangé pour déplacer ledit coulisseau (52) et comportant de part et d'autre d'un plan médian (XZ) du mât réacteur (100), au moins un guide (402a-b) solidaire de la structure fixe (50) au niveau d'une partie arrière du capot arrière mobile (204a) en position fermée, pour chaque au moins un guide (402a-b), un élément coulissant (404a-b) solidaire du coulisseau (52) et monté coulissant le long de chaque guide (402a-b) disposé du même côté pour réaliser une liaison glissière, et pour chaque élément coulissant (404a-b), un support (406a-b) solidaire de la structure fixe (50) et présentant une palette (408a-b) parallèle à la direction de translation (T) et sur laquelle une surface parallèle à la direction de translation (T) du coulisseau (52) repose, où chaque support (406a-b) est disposé à l'avant des guides (402a-b) et globalement au milieu de l'élément coulissant (404a-b) lorsque le coulisseau (52) est en position avancée, et
- un système de blocage prenant alternativement une position verrouillée dans laquelle il bloque le coulisseau (52) en position avancée, et une position déverrouillée dans laquelle il ne bloque pas le coulisseau (52).

2. Aéronef (10) selon la revendication 1, **caractérisé en ce que** chaque élément coulissant (404a-b) présente un cylindre parallèle à la direction de translation (T) dont la longueur est au moins égale à la longueur de déplacement du coulisseau (52), et **en ce que** chaque guide (402a-b) présente un alésage parallèle à la direction de translation (T) dans lequel ledit cylindre est monté coulissant.

3. Aéronef (10) selon l'une des revendications 1 ou 2, **caractérisé en ce que** la structure fixe (50) comporte un pion de centrage avant bas (350) et **en ce que** le coulisseau (52) présente un premier logement (351) dans lequel loge ledit pion de centrage avant bas (350) lorsque le coulisseau (52) arrive en position avancée, où le premier logement (351) est disposé au niveau du plan médian (XZ) et en partie basse et à l'avant du capot arrière mobile (204a).

4. Aéronef (10) selon l'une des revendications 1 à 3, **caractérisé en ce que** le coulisseau (52) présente deux pions de centrage avant haut (352) disposés de part et d'autre du plan médian (XZ) et en partie haute et à l'avant du capot arrière mobile (204a), et **en ce que** la structure fixe (50) présente, pour chaque pion de centrage avant haut (352), un deuxième logement (353) dans lequel loge ledit pion de centrage avant haut (352) lorsque le coulisseau (52) arrive en position avancée.

5. Aéronef (10) selon l'une des revendications 1 à 4, **caractérisé en ce que** le coulisseau (52) présente deux pions de centrage arrière (354) disposés de part et d'autre du plan médian (XZ) et en partie haute et au voisinage des guides (402a-b) en position avancée, et **en ce que** la structure fixe (50) présente, pour chaque pion de centrage arrière (354), un troisième logement (355) dans lequel loge ledit pion de centrage arrière (354) lorsque le coulisseau (52) arrive en position avancée.

## Patentansprüche

1. Luftfahrzeug (10), umfassend eine feste Struktur (50), einen Flügel (12), ein Triebwerk (14) und einen Triebwerkspylon (100), der zwischen dem Flügel (12) und dem Triebwerk (14) befestigt ist, wobei der Triebwerkspylon (100) eine Primärstruktur (302) aufweist, mit der das Triebwerk (14) und der Flügel (12) aneinander befestigt werden sollen, sowie ein Verkleidungssystem (200), umfassend:
- eine Anordnung aus vorderen Hauben (202, 203), wobei die Hauben um die Primärstruktur (302) herum befestigt sind,
- einen Schieber (52), der eine bewegliche hintere Haube (204a) trägt, die in der Verlängerung und hinter der Anordnung aus vorderen Hauben (202, 203) angeordnet ist, wobei der Schieber (52) parallel zu einer Translationsrichtung (T) aus einer vorderen Position, in der sich die bewegliche hintere Haube (204a) in der Verlängerung hinter der Anordnung aus vorderen Hauben (202, 203) befindet, geradlinig in eine hintere Position bewegbar ist, in der die bewegliche hintere Haube (204a) zur Anordnung aus vorderen Hauben (202, 203) hin entfernt hinten liegt,
- ein Bewegungssystem (250), das so angeordnet ist, dass es den Schieber (52) bewegt und auf beiden Seiten einer Mittelebene (XZ) des Triebwerkspylons (100) mindestens eine Führung (402a-b) umfasst, die im Bereich eines hinteren Abschnitts der beweglichen hinteren Haube (204a) in der geschlossenen Position fest mit der festen Struktur (50) verbunden ist, für jede mindestens eine Führung (402a-b) ein Schubelement (404a-b), das fest mit dem Schieber (52) verbunden ist und entlang jeder Führung (402a-b) verschiebbar montiert ist, die auf derselben Seite angeordnet ist, damit eine Gleitverbindung hergestellt ist, und für jedes Schubelement (404a-b) einen Träger (406a-b), der fest mit der festen Struktur (50) verbunden ist und eine Platte (408a-b) parallel zur Translationsrichtung (T) aufweist, auf der eine Fläche parallel zur Translationsrichtung (T) des Schiebers (52) aufliegt, wobei jeder Träger (406a-b) vor den Führungen (402a-b) und ganz allgemein in der Mitte des Schubelements (404a-b) angeordnet ist, wenn sich der Schieber (52) in der vorderen Position befindet, und
- ein Arretiersystem, das abwechselnd eine verriegelte Position, in der es den Schieber (52) in der vorderen Position blockiert, und eine entriegelte Position einnimmt, in der es den Schieber (52) nicht blockiert.

2. Luftfahrzeug (10) nach Anspruch 1, **dadurch gekennzeichnet, dass** jedes Schubelement (404a-b) parallel zur Translationsrichtung (T) einen Zylinder aufweist, der mindestens genauso lang ist wie die Bewegungsstrecke des Schiebers (52), und dadurch, dass jede Führung (402a-b) eine Bohrung parallel zur Translationsrichtung (T) aufweist, in der der Zylinder verschiebbar montiert ist.

3. Luftfahrzeug (10) nach einem der Ansprüche 1 oder 2, **dadurch gekennzeichnet, dass** die feste Struktur (50) einen unteren vorderen Zentrierzapfen (350) umfasst und dadurch, dass der Schieber (52) eine erste Aufnahme (351) aufweist, in der der untere vordere Zentrierzapfen (350) aufgenommen ist, wenn der Schieber (52) in der vorderen Position ankommt, wobei die erste Aufnahme (351) im Bereich der Mittelebene (XZ) und im unteren Abschnitt und vor der beweglichen hinteren Haube (204a) angeordnet ist.

4. Luftfahrzeug (10) nach einem der Ansprüche 1 bis 3, **dadurch gekennzeichnet, dass** der Schieber (52) zwei obere vordere Zentrierzapfen (352) aufweist, die auf beiden Seiten der Mittelebene (XZ) und im oberen Abschnitt und vor der beweglichen hinteren Haube (204a) angeordnet sind, und dadurch, dass die feste Struktur (50) für jeden oberen vorderen Zentrierzapfen (352) eine zweite Aufnahme (353) aufweist, in der der obere vordere Zentrierzapfen (352) aufgenommen ist, wenn der Schieber (52) in der vorderen Position ankommt.

5. Luftfahrzeug (10) nach einem der Ansprüche 1 bis 4, **dadurch gekennzeichnet, dass** der Schieber (52) zwei hintere Zentrierzapfen (354) aufweist, die auf beiden Seiten der Mittelebene (XZ) und im oberen Abschnitt und in der Nähe der Führungen (402a-b) in der vorderen Position angeordnet sind, und dadurch, dass die feste Struktur (50) für jeden hinteren Zentrierzapfen (354) eine dritte Aufnahme (355) aufweist, in der der hintere Zentrierzapfen (354) aufgenommen ist, wenn der Schieber (52) in der vorderen Position ankommt.

## Claims

1. Aircraft (10) having a fixed structure (50), a wing (12), an engine (14) and an engine pylon (100) fastened between the wing (12) and the engine (14), the engine pylon (100) having a primary structure (302) intended to fasten the engine (14) and the wing (12) to each other, and a cowling system (200) having:
- a front set of cowls (202, 203), wherein the cowls are fastened around the primary structure (302),
- a slider (52) bearing a mobile rear cowl (204a) disposed in the continuation of and at the rear of the front set of cowls (202, 203), wherein the slider (52) is able to move in translation parallel to a translation direction (T) from an advanced position, in which the mobile rear cowl (204a) is in the continuation of and at the rear of the front set of cowls (202, 203), to a retracted position, in which the mobile rear cowl (204a) is moved away, towards the rear, from the front set of cowls (202, 203),
- a displacement system (250) arranged to move said slider (52) and having, on either side of a median plane (XZ) of the engine pylon (100), at least one guide (402a-b) as one with the fixed structure (50) at a rear part of the mobile rear cowl (204a) in the closed position, for each at least one guide (402a-b), a sliding element (404a-b) as one with the slider (52) and mounted so as to be able to slide along each guide (402a-b) disposed on the same side so as to realize a sliding connection, and, for each sliding element (404a-b), a support (406a-b) as one with the fixed structure (50) and having a blade (408a-b) parallel to the translation direction (T) and on which a surface parallel to the translation direction (T) of the slider (52) rests, wherein each support (406a-b) is disposed at the front of the guides (402a-b) and generally in the middle of the sliding element (404a-b) when the slider (52) is in the advanced position, and
- an immobilizing system alternately adopting a locked position in which it immobilizes the slider (52) in the advanced position, and an unlocked position in which it does not immobilize the slider (52).

2. Aircraft (10) according to Claim 1, **characterized in that** each sliding element (404a-b) has a cylinder parallel to the translation direction (T) of which the length is at least equal to the length of displacement of the slider (52), and **in that** each guide (402a-b) has a bore parallel to the translation direction (T) in which said cylinder is mounted so as to be able to slide.

3. Aircraft (10) according to either of Claims 1 and 2, **characterized in that** the fixed structure (50) has a bottom front centring pin (350) and **in that** the slider (52) has a first housing (351) in which said bottom front centring pin (350) is housed when the slider (52) arrives in the advanced position, wherein the first housing (351) is disposed at the median plane (XZ) and in the bottom part and at the front of the mobile rear cowl (204a).

4. Aircraft (10) according to one of Claims 1 to 3, **characterized in that** the slider (52) has two top front centring pins (352) disposed on either side of the median plane (XZ) and in the top part and at the front of the mobile rear cowl (204a), and **in that** the fixed structure (50) has, for each top front centring pin (352), a second housing (353) in which said top front centring pin (352) is housed when the slider (52) arrives in the advanced position.

5. Aircraft (10) according to one of Claims 1 to 4, **characterized in that** the slider (52) has two rear centring pins (354) disposed on either side of the median plane (XZ) and in the top part and near the guides (402a-b) in the advanced position, and **in that** the fixed structure (50) has, for each rear centring pin (354), a third housing (355) in which said rear centring pin (354) is housed when the slider (52) arrives in the advanced position.
